# EUROPÄISCHE PATENTSCHRIFT

(11) **EP 3 147 545 B1**
(45) Veröffentlichungstag und Bekanntmachung des Hinweises auf die Patenterteilung: **01.01.2020**
(21) Anmeldenummer: 16186624.9
(22) Anmeldetag: 31.08.2016
(51) Int. Cl.: F16K 1/12, F02C 7/232, F16K 31/06

(54) **COAXIAL, DRUCKAUSGEGLICHEN, DIREKTGESTEUERT AUFGEBAUTES VENTIL MIT GERINGEN DRUCKVERLUSTEN**
COAXIAL, PRESSURE BALANCED, DIRECTLY CONTROLLED VALVE WITH LOW PRESSURE DROP
CLAPET EN SAILLIE A COMMANDE DIRECTE, COAXIAL, A COMPENSATION DE PRESSION PRESENTANT DE FAIBLES PERTES DE PRESSION

(30) Priorität: 28.09.2015 DE 102015012444
(43) Veröffentlichungstag der Anmeldung: 29.03.2017
(73) Patentinhaber: Müller, Friedrich, 74196 Neuenstadt (DE)
(72) Erfinder: Müller, Friedrich, 74196 Neuenstadt (DE)
(74) Vertreter: Lenzing Gerber Stute

(56) Entgegenhaltungen:
- WO-A1-00/04311
- DE-A1- 19 852 599
- DE-B4- 19 837 694
- FR-A- 969 077
- FR-A1- 2 916 513

## Beschreibung

Zur Steuerung des Medienflusses in einer Rohrleitung werden Ventile eingesetzt. Nahezu alle Bauweisen der Ventile (Kugelhahn, Sitzventil, Schieber, Membranventil, Klappe) haben die Eigenschaft, dass die Betätigungskräfte des Schließorganes mit steigendem Druck innerhalb der Rohrleitung größer werden. Spätestens im abgesperrten Zustand der Ventile sorgt die höhere Druckdifferenz meist mindestens proportional für steigende Betätigungskräfte bzw. Betätigungsmomente. Am Beispiel eines Sitzventils erläutert bedeutet das, dass im Falle eines geschlossenen Ventils die Kräfte, die notwendig sind um den Kegel vom Sitz abzuheben, in etwa linear mit der steigendenden Druckdifferenz steigen. Diese Kräfte lassen sich sehr einfach ermitteln, in dem die Fläche des Sitzkegels mal der Druckdifferenz genommen wird. Sehr ähnliche Verhältnisse herrschen ebenso in den anderen benannten Armaturenbauweisen wie Kugelhahn, Schieber etc. Diese Abhängigkeit der Schließkräfte ist insbesondere dann von Bedeutung, wenn ein solches Ventil magnetisch direktgesteuert betätigt werden soll. Spätestens bei Sitzdurchmessern bzw. Kegeldurchmessern von 20mm und mehr und Differenzdrücken von 40bar und mehr, werden die Kräfte so groß, dass eine Betätigung des Sitzventils mittels eines Elektromagneten nur mit extrem hohen Leistungen möglich ist. Dies ist in der Regel nicht vertretbar und so findet man nur wenige direktgesteuerte Hubventile oberhalb der DN25 oberhalb von PN25.

Trotzdem werden in vielen Fällen elektromagnetisch direktgesteuerte Ventile benötigt zum Beispiel in Einsatzfällen, wo keine Druckluft bzw. keine Hydraulik zur Verfügung steht. Eine elektrische Stromversorgung ist heutzutage an nahezu jeder Maschine bzw. Anlage verfügbar und so haben die elektrisch angesteuerten Magnetventile stets ihre Vorteile.

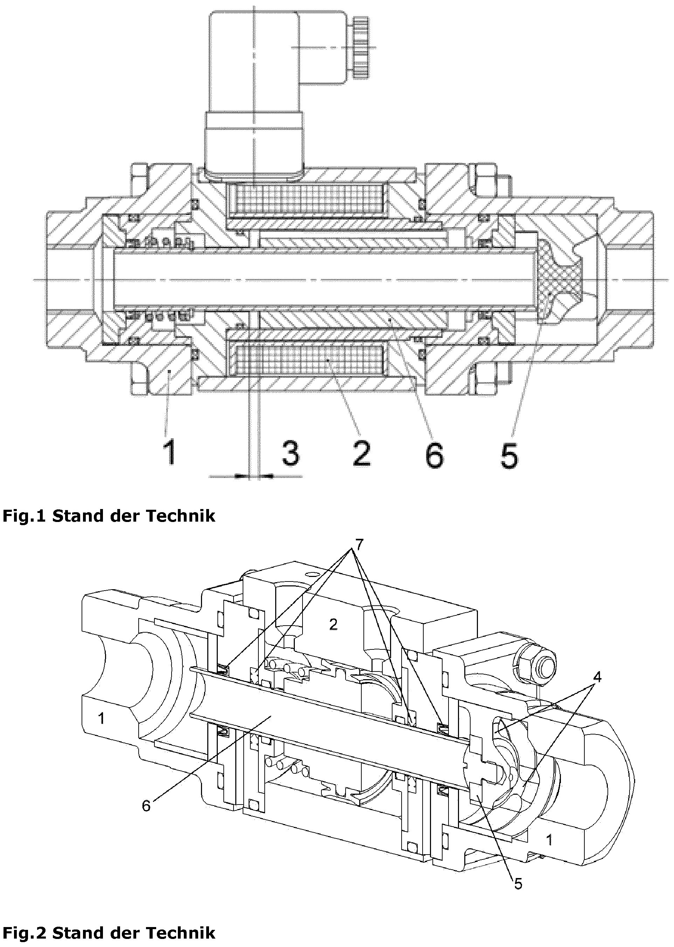

Seit ca. 50 Jahren ist die sogenannte coaxiale druckausgeglichene Bauweise von Ventilen im Markt verfügbar, wie in **Fig.1** dargestellt. So ist zum Beispiel die Firma müller co-ax ag aus Forchtenberg ein Hersteller, der Ventile herstellt, deren Betätigungskräfte nur rudimentär von den im Ventil herrschenden Drücken abhängen.

Ein innerhalb des Ventilkörpers **1** axial bewegliches Rohr, dient als Schließorgan **6** und wird üblicherweise als Steuerrohr bezeichnet, welches entlang der Steuerrohrachse hin und her bewegt wird mit Hilfe des fest mit dem rohrförmigen Schließorgan verbundenen Polkernes der korrespondierenden Magnetspule **2,** um den Medienfluss durch das Ventil regeln bzw. absperren zu können. Hierbei wird die Stirnseite des Steuerrohres für ein Dichtschließen des Ventils, also das Absperren des Medienflusses gegen den Sitz **5** gepresst. Siehe z. Bsp. Patent: DE19837694 B4.

Da eine solche Bauweise nahezu perfekt druckausgeglichen ist, hängen die Betätigungskräfte des Steuerrohres nur sehr gering von den innerhalb des Ventils herrschenden Drücken ab.

Im Gegensatz zu einem üblichen Sitzventil bei dem der im Ventil herrschende Druck stets eine Kraft auf das Schließorgan entlang der Schließrichtung ausübt, so daß die Betätigungskräfte stets unmittelbar von dem im Ventil herrschenden Druck nahezu linear beeinflußt werden, ist dies bei dem koaxial aufgebauten Ventil nach **Fig.1** anders. Im Ventil nach **Fig.1** wirkt der Druck unabhängig von der Einbaurichtung stets radial auf die Wandungen des Steuerrohres und damit senkrecht zu der Betätigungsrichtung des Schließorgans **6.** Die innerhalb des so aufgebauten Ventiles herrschenden Druckverhältnisse haben nahezu keinen Einfluß auf die Betätigungskräfte des Schließorgans **6.** Im Wesentlichen sind zur Betätigung eines solchen Ventils lediglich die in den dynamischen Dichtungen **7,** die zur Abdichtung des Steuerrohres nach außen dienen, entstehenden Reibungskräfte zu überwinden. Diese Bauweise erlaubt es Ventile mit kleinen Betätigungskräften für hohe Drücke auch in großen Nennweiten aufzubauen. Solche coaxial aufgebauten, druckausgeglichenen, direktgesteuerten, elektromagnetisch betätigten oder kolbenangetriebenen Ventile sind bisher in der gezeigten Bauweise hergestellt worden, wobei der Antrieb, der zur Betätigung des Steuerrohres notwendig ist, coaxial um das Steuerrohr herum aufgebaut wird. Das gesamte Ventil ist im Wesentlichen coaxial aufgebaut. Analog werden auch hydraulisch gesteuerte Ventile aufgebaut **Fig.2**

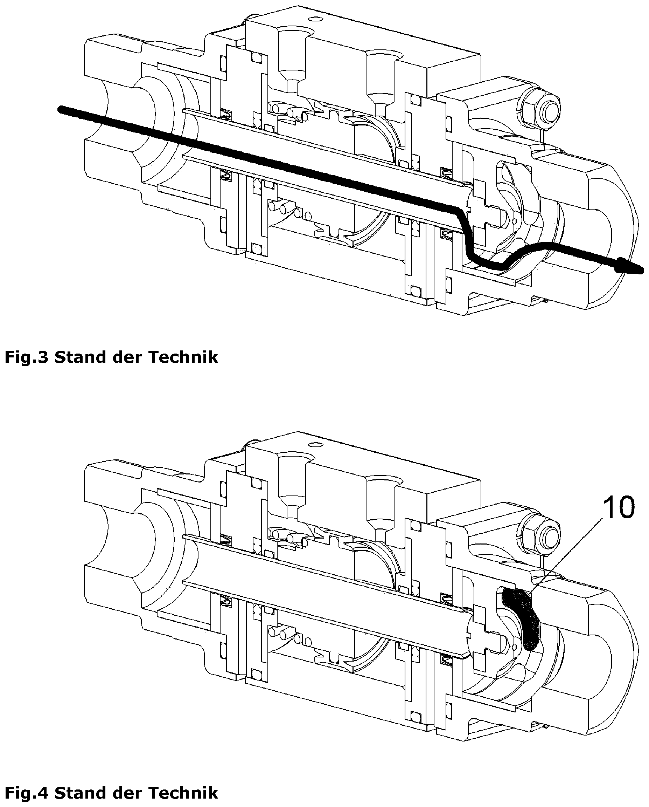

Leider sind Druckverluste bei der Strömung durch die momentan bekannten Konstruktionen von coaxial aufgebauten Ventilen sehr hoch. Dies ist vor allem bedingt durch die vielfache Umlenkung (im gezeigten Beispiel insgesamt vierfach umgelenkt um 90°) der Strömung im Bereich des Sitzes **5** und durch die Einschnürung durch die in eben diesem Bereich angebrachten Stützrippen **4.** In **Fig.3****.** ist skizzenhaft die Strömung verdeutlicht.

Die momentan übliche Bauweise der Ventile führt zu hohen Druckverlusten am Ventil und den damit verbundenen geringen Kv Werten.

Die WO 00/04311 A1 zeigt ein zuvor beschriebenes Ventil mit einem Steuerrohr, welches mit einem Ventilsitz zusammenwirkt. Der Ventilsitz ist dabei sowohl an der Ventilausgangsseite als auch an der Ventileingangsseite mittels Ringes zentriert und im Ventilgehäuse eingespannt und schwebend gehalten. Das durch das Steuerrohr fließende Medium wir bis zum Ventilausgang drei mal um jeweils ca. 45-90° umgelenkt, wodurch der Strömungswiderstand durch das Ventil relativ groß ist.

FR 2 916 513 A1 offenbart ein Absperrventil mit einem Ventilsitz, der über ein stabförmiges Abstützelement an der Ausgangsseite des Ventils befestigt ist, und einem Schließorgan.

Es besteht also Bedarf nach einem coaxial aufgebauten Ventil, das für hohe Drücke, bei geringen Betätigungskräften eingesetzt werden kann, bei dem aber kleinere Druckverluste erreicht werden sollen als mit den heute üblichen Konstruktionen.

Dieser Bedarf soll erfindungsgemäß auf die im Folgenden beschriebene Art und Weise gedeckt werden, gemäß Anspruch 1.

Bei der erfindungsgemäßen Lösung handelt es sich um die Konstruktion eines coaxial aufgebauten Ventiles, das druckausgeglichen ist, dessen Aufbau im Wesentlichen dem des heute auf dem Markt üblichen Ventil entspricht, bei dem aber insbesondere die Befestigung des Sitzes **5** und die Anordnung der Stützrippen **4** als auch die Strömungslenkung verändert ist.

In einem marktüblichen Ventil wäre der Sitz **5** durch Stützrippen **4** in unmittelbarer Nähe des Sitzes **5** mit dem Gehäuse **1** verbunden. Auf diese Art und Weise wird die lichte Öffnung **10** in mehrere jeweils kleine Teilbereiche unterbrochen und nur durch mehrere kleinere ovale oder runde Öffnungen dargestellt. Große Umlenkungen und Strömungsverluste an den meist nur sehr kleinen Öffnungen sind die Folge. Ergänzend sollte erwähnt werden, dass die Strömung durch eine große Öffnung wesentlich ungehinderter fließen kann als durch mehrere kleine Öffnungen selbst dann, wenn die Querschnittsfläche der mehreren kleinen Öffnungen gleich der Querschnittsfläche einer großen Öffnung ist.

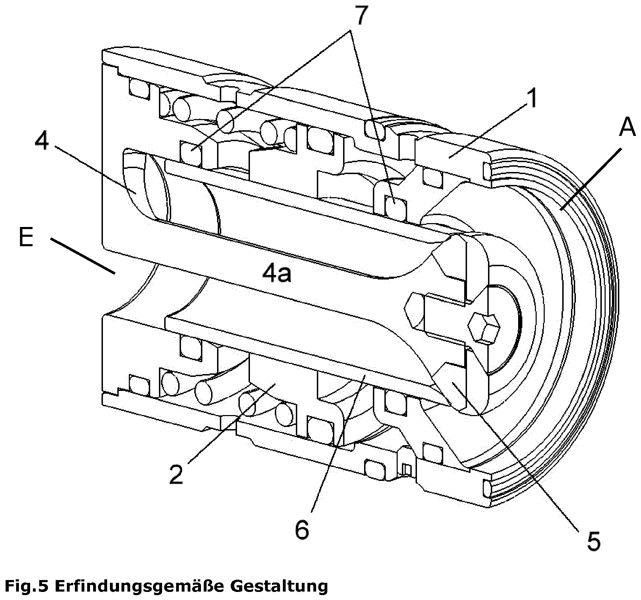

Die **Fig.5** zeigt schematisch die erfindungsgemäße Gestaltung des Ventiles. Im Gegensatz zu einem marktüblichen Ventil nach dem Stand der Technik ist die Befestigung des Sitzes **5** anders gelöst. Die Stützrippen **4** sind nicht mehr im unmittelbaren Bereich des Sitzes **5** angeordnet, sondern möglichst weit von diesem entfernt, nämlich am anderen Ende des Schließorgans **6,** wie in **Fig.5** und folgenden abgebildet.

Hierbei gibt es viele Möglichkeiten, von denen nur einige Beispiele erläutert werden sollen. Idealerweise sind die zur Befestigung des Sitzes **5** innerhalb des Gehäuses **1** notwendigen Stützrippen **4** möglichst weit vom Sitz **5** entfernt und liegen in einem Bereich des Gehäuses **1** der über eine möglichst große lichte Öffnung verfügt, so dass die Einschnürung durch eine oder mehrere Stützrippen **4** eine möglichst geringe Behinderung der Strömung bewirken. Idealerweise ist nur eine Stützrippe **4** zur Befestigung des Sitzes notwendig **Fig.5** und **Fig.6** und **Fig.7****.** Vorzugsweise verfügt die Stützrippe **4** über einen vorzugsweise zylindrischen Bereich **4a** der durch das Schließorgan **6** geführt ist und zur Befestigung des Sitzes **5** verwendet wird.

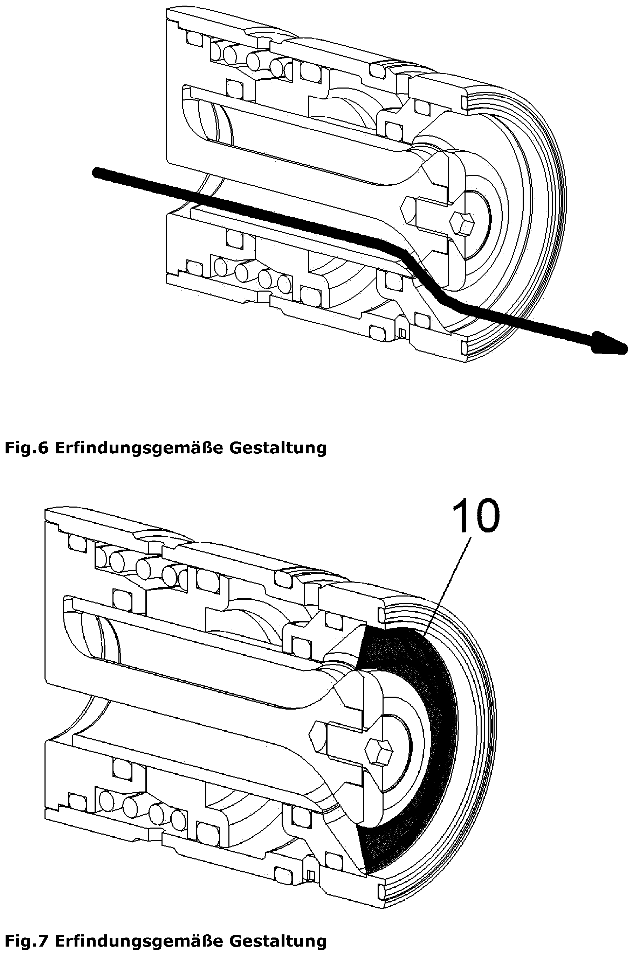

Die **Fig.5** zeigt schematisch die erfindungsgemäße Gestaltung des Ventiles in geschlossener Stellung. Die **Fig.6** zeigt schematisch die erfindungsgemäße Gestaltung des Ventiles in geöffneter Stellung mit skizziertem Strömungsgang. Man erkennt deutlich, dass die Strömung wesentlich sanfter um den Sitz **5** herum geführt wird. Im dargestellten Beispiel nur noch eine zweifache Umlenkung um jeweils ca. 45°. Die **Fig.7** zeigt schematisch die erfindungsgemäße Gestaltung des Ventiles in geöffneter Stellung mit skizzierter ringförmiger lichter Öffnung **10** im Bereich des Sitzes **5.** Es ist deutlich erkennbar, dass der engste Bereich für die Strömung nicht mehr im Bereich des Sitzes **5** liegt, wie dies in einem Ventil nach dem heutigen Stand der Technik der Fall wäre.

### Bezugszeichenliste

- **1**: Ventilgehäuse
- **2**: Antrieb: Magnet- oder Kolbenantrieb (pneumatisch oder hydraulisch)
- **3**: Ventilhub
- **4**: Eine oder mehrere Stützrippen (des Sitzes 5)
- **5**: Sitz
- **6**: Schließorgan
- **7**: Dynamische Dichtung
- **10**: Lichte Öffnung im Sitzbereich
- A: Ventilausgang
- E: Ventileingang

## Patentansprüche

1. Absperrventil zur steuerbaren Fluiddurchströmung, wobei das Ventil einen Ventileingang (E) und einen Ventilausgang (A) sowie ein Schließorgan (6) aufweist, wobei das Schließorgan (6) im Wesentlichen die Gestalt eines hohlen, runden Rohres besitzt und welches Schließorgan (6) zur Absperrung des Mediumsstroms axial entlang der Achse des Schließorgans (6) innerhalb eines Ventilkörpers (1) verschoben wird und wobei das Medium in offener Stellung des Ventiles im Wesentlichen durch das Schließorgan (6) geführt wird und wobei das Schließorgan (6) mit einem Hubantrieb direkt betätigt wird, der im Wesentlichen coaxial um das Schließorgan (6) herum angeordnet ist, und wobei in der unmittelbaren Nachbarschaft eines Sitzes (5) keine Stützrippen (4) angebracht sind, sondern lediglich an das dem Sitz (5) gegenüberliegende Ende (E) des Ventilkörpers (1) mindestens eine Stützrippe (4) angebracht ist und wobei die mindestens eine Stützrippe (4) so ausgeführt ist, dass sie über einen Teil (4a) verfügt, der als längliche Stange ausgeführt ist, die durch das Schließorgan (6) hindurch geführt ist, um die Abstützung des Sitzes (5) zu übernehmen, und wobei die aus dem Schließorgan (6) kommende Strömung im Bereich um den Sitz (5) herum bis zum Ventilausgang (A) maximal zweifach um jeweils maximal 90° umgelenkt wird, **dadurch gekennzeichnet, daß** das Schließorgan zur Mediumsstromabsperrung stirnseitig gegen den Sitz (5) gepreßt wird, so daß im abgesperrten Zustand des Ventiles die Druckdifferenz im Wesentlichen radial auf die Wandung des rohrförmigen Schließorganes (6) wirkt.

2. Absperrventil nach Anspruch 1 **dadurch gekennzeichnet, dass** die lichte Öffnung um den Sitz herum die Form eines ununterbrochenen Ringes besitzt.

3. Absperrventil nach einem oder mehreren der Ansprüche 1-2 **dadurch gekennzeichnet, dass** nur eine Stützrippe (4) die Fixierung des Sitzes (5) am Gehäuse (1) übernimmt

4. Absperrventil nach einem oder mehreren der Ansprüche 1-4 **dadurch gekennzeichnet, dass** die Stützrippe (4) und (4a) aus mehreren Teilen ausgeführt sind.

5. Absperrventil nach einem oder mehreren der Ansprüche 1-5 **dadurch gekennzeichnet, dass** zur Betätigung des Schließorgans (6) ein elektromagnetisch gesteuerter Antrieb (2) verwendet wird, der im Wesentlichen koaxial um das Steuerorgan (6) angeordnet ist.

6. Absperrventil nach einem oder mehreren der Ansprüche 1-6 **dadurch gekennzeichnet, dass** zur Betätigung des Schließorgans (6) ein pneumatisch gesteuerter Antrieb (2) verwendet wird, der im Wesentlichen koaxial um das Steuerorgan (6) angeordnet ist.

7. Absperrventil nach einem oder mehreren der Ansprüche 1-7 **dadurch gekennzeichnet, dass** zur Betätigung des Schließorgans (6) ein hydraulisch gesteuerter Antrieb (2) verwendet wird, der im Wesentlichen koaxial um das Steuerorgan (6) angeordnet ist.

8. Absperrventil nach einem oder mehreren der Ansprüche 1-8 **dadurch gekennzeichnet, dass** der Bereich (4a) der Stützrippe (4) außermittig und nicht koaxial innerhalb des Steuerorganes (6) angeordnet ist.

9. Absperrventil nach einem oder mehreren der Ansprüche 1-9 **dadurch gekennzeichnet, dass** der engste für die Strömung offene Bereich nicht mehr im Bereich des Sitzes (5) liegt.

## Claims

1. Shut-off valve for controllable fluid throughflow, wherein the valve has a valve input (E) and a valve output (A) and a closure member (6), wherein the closure member (6) is substantially in the form of a hollow, round pipe, and which closure member (6) is displaced axially along the axis of the closure member (6) inside a valve member (1) in order to block the medium flow,
and wherein the medium in an open position of the valve is guided substantially through the closure member (6) and wherein the closure member (6) is actuated directly with a lifting drive, which is arranged substantially coaxially around the closure member (6), and wherein in the direct vicinity of a valve seat (5) no support ribs (4) are arranged, but instead only at least one support rib (4) is arranged to the end (E) of the valve member (1) opposite the valve seat (5), and wherein the at least one support rib (4) is constructed in such a manner that it has a portion (4a) which is constructed as an elongate rod and which is guided through the closure member (6) in order to take up the support of the valve seat (5), and wherein the flow coming out of the closure member (6) is redirected in the region of the valve seat (5) up to the valve output (A) by a maximum of two and each redirection by an angle of 90° at most, **characterised in that** the closure member in order to shut off the medium flow is pressed at the end face against the valve seat (5) so that, in the shut-off state of the valve, the pressure difference acts substantially radially on the wall of the tubular closure member (6).

2. Shut-off valve according to claim 1, **characterised in that** the clear opening around the seat is in the form of an uninterrupted ring.

3. Shut-off valve according to one or more of claims 1 or 2, **characterised in that** only one support rib (4) takes up the fixing of the valve seat (5) to the housing (1).

4. Shut-off valve according to one or more of claims 1 to 4, **characterised in that** the support rib (4) and (4a) are constructed from a plurality of components.

5. Shut-off valve according to one or more of claims 1 to 5, **characterised in that** an electromagnetically controlled drive (2) which is arranged substantially coaxially around the control member (6) is used to actuate the closure member (6).

6. Shut-off valve according to one or more of claims 1 to 6, **characterised in that** a pneumatically controlled drive (2) which is arranged substantially coaxially around the control member (6) is used to actuate the closure member (6).

7. Shut-off valve according to one or more of claims 1 to 7, **characterised in that** a hydraulically controlled drive (2) which is arranged substantially coaxially around the control member (6) is used to actuate the closure member (6).

8. Shut-off valve according to one or more of claims 1 to 8, **characterised in that** the region (4a) of the support rib (4) is arranged eccentrically and not coaxially inside the control member (6).

9. Shut-off valve according to one or more of claims 1 to 9, **characterised in that** the narrowest region open for the flow is not in the region of the valve seat (5).

## Revendications

1. Vanne d'arrêt destinée à la traversée commandable d'un fluide, la vanne comportant une entrée de vanne (E) et une sortie de vanne (A) ainsi qu'un organe de fermeture (6), l'organe de fermeture (6) possédant sensiblement la forme d'un tube creux rond et l'organe de fermeture (6) étant déplacé à l'intérieur d'un corps de vanne (1) dans le sens axial le long de l'axe de l'organe de fermeture (6) en vue de bloquer le flux de fluide, et le fluide, dans la position ouverte de la vanne, étant acheminé sensiblement à travers l'organe de fermeture (6), et l'organe de fermeture (6) étant actionné directement avec un mécanisme d'excursion qui est disposé de manière sensiblement coaxiale autour de l'organe de fermeture (6), et aucune nervure support (4) n'étant installée au voisinage immédiat d'un siège (5), mais au moins une nervure support (4) étant installée uniquement au niveau de l'extrémité (E) du corps de vanne (1) à l'opposé du siège (5), l'au moins une nervure support (4) étant exécutée de telle sorte qu'elle dispose d'une partie (4a) qui est réalisée sous la forme d'une tige allongée, laquelle est guidée à travers l'organe de fermeture (6) afin de prendre en charge le soutien du siège (5), et l'écoulement en provenance de l'organe de fermeture (6) étant dévié au maximum deux fois respectivement au maximum de 90° dans la zone autour du siège (5), **caractérisée en ce que** l'organe de fermeture est pressé du côté frontal contre le siège (5) en vue de bloquer le courant de fluide, de sorte qu'à l'état fermé de la vanne, la différence de pression agit sensiblement dans le sens radial sur la paroi de l'organe de fermeture (6) de forme tubulaire.

2. Vanne d'arrêt selon la revendication 1, **caractérisée en ce que** l'ouverture utile autour du siège possède la forme d'un anneau ininterrompu.

3. Vanne d'arrêt selon une ou plusieurs des revendications 1 et 2, **caractérisée en ce qu'**une seule nervure support (4) prend en charge l'immobilisation du siège (5) au niveau du corps (1).

4. Vanne d'arrêt selon une ou plusieurs des revendications 1 à 3, **caractérisée en ce que** les nervures supports (4) et (4a) sont réalisées en plusieurs parties.

5. Vanne d'arrêt selon une ou plusieurs des revendications 1 à 5, **caractérisée en ce qu'**un mécanisme d'entraînement (2) à commande électromagnétique est utilisé pour l'actionnement de l'organe de fermeture (6), lequel est disposé de manière sensiblement coaxiale autour de l'organe de fermeture ( 6).

6. Vanne d'arrêt selon une ou plusieurs des revendications 1 à 6, **caractérisée en ce qu'**un mécanisme d'entraînement (2) à commande pneumatique est utilisé pour l'actionnement de l'organe de fermeture (6), lequel est disposé de manière sensiblement coaxiale autour de l'organe de fermeture (6).

7. Vanne d'arrêt selon une ou plusieurs des revendications 1 à 7, **caractérisée en ce qu'**un mécanisme d'entraînement (2) à commande hydraulique est utilisé pour l'actionnement de l'organe de fermeture (6), lequel est disposé de manière sensiblement coaxiale autour de l'organe de fermeture (6).

8. Vanne d'arrêt selon une ou plusieurs des revendications 1 à 8, **caractérisée en ce que** la zone (4a) des nervures supports (4) est disposée de manière excentrée et non coaxiale à l'intérieur de l'organe de fermeture (6).

9. Vanne d'arrêt selon une ou plusieurs des revendications 1 à 9, **caractérisée en ce que** la zone ouverture la plus étroite ouverte pour l'écoulement ne se trouve plus dans la zone du siège (5).
